Europäisches Patentamt

European Patent Office

Office européen des brevets

(19)

(11) Publication number: **0 439 866 A1**

## EUROPEAN PATENT APPLICATION

(12)

(21) Application number: **90203482.6**

(22) Date of filing: **21.12.90**

(51) Int. Cl.⁵: **C02F 1/62**, C02F 1/28, B01J 20/24

The title of the invention has been amended (Guidelines for Examination in the EPO, A-III, 7.3).

(30) Priority: **02.02.90 BE 9000127**

(43) Date of publication of application:
**07.08.91 Bulletin 91/32**

(84) Designated Contracting States:
**BE DE FR GB NL**

(71) Applicant: **SOBERALIA N.V**
**Wijtschotbaan, 3**
**Schoten(BE)**

(72) Inventor: **Braeckman, Franky Maurice Charles**
**Meidoornlaan 39**
**B-9230 Wetteren(BE)**

(74) Representative: **Claeys, Pierre et al**
**Bureau Gevers rue de Livourne 7 Bte 1**
**B-1050 Bruxelles(BE)**

(54) Product and method for separating contaminants from polluted water.

(57) The invention relates to a product for separating contaminants, especially heavy metals, from polluted water, which product comprises a collagen derivative which is deposited on a granular, preferably tannin containing carrier so that the separability from water is improved. The invention also relates to a method for separating contaminants wherein use is made of this product.

EP 0 439 866 A1

# PRODUCT AND METHOD FOR SEPARATING CONTAMINANTS FROM POLLUTED WATER

This invention relates to a product for separating contaminants from polluted water, which product comprises a collagen derivative.

By collagen derivates is meant here not only collagen hydrolysis products such as animal glues and gelatines but also all kinds of possible chemical modifications of the latter, for example by reaction with cross-linkers.

The use of animal glues for removing contaminants, notably particles in suspension or colloidal particles from waste waters is described a.o. on pages 96-97 of "Animal glue in industry" published by the National Association of Glue Manufacturers, Inc., New York, 1951. Such particles present in the polluted water can, as described in this publication, be flocculated and precipitated by adding a small concentration of bone glue. A concentration of 2 ppm would in some cases already be sufficient.

Further, Chemical Abstracts Nr. 108:43306 of 1988 teaches also the use of animal glues for removing synthetic tannins, for example from waste waters of tanneries. By the addition of an animal glue to the tannin containing waste water , the tannin forms a complex with the glue so that both of them coagulate together and precipitate.

However, an important cause of water pollution are further heavy metals which are mainly dissolved in the polluted water as ions and which consequently do not form any colloidal or suspended particles per se. The legislator provides always more severe discharge standards for the discharge of these heavy metals. The removal of these heavy metals implies problems, for example when, as usual, chemicals are used herefor which react with heavy metal ions to form a removable precipitate. An example of these are the chemicals $NaOH$, $Ca(OH)_2$, $CaCO_3$, $CaO$ and $Na_2CO_3$ which can be used to adjust the pH of the polluted water in such a manner that the heavy metals precipitate as hydroxide. However, a problem herewith is that each heavy metal precipitates only within a small and for substantially each heavy metal different pH range. Moreover, further chemicals are sometimes required, for example chromium with valency six has to be reduced to chromium with valency three before it can be precipitated as hydroxide. The use of all these chemicals implies of course an undesired pollution of the environment.

A drawback of the known collagen derivatives is that they do not provide as such an appropriate solution to the hereabove mentioned problem of the heavy metals. In order that these collagen derivatives would be appropriate for separating heavy metals from polluted water, they have to present a sufficiently large affinity for heavy metals and it has to be possible to remove them back easily from the polluted water after having bound with heavy metals. However, the known collagen derivatives as such do not meet simultaneously these two conditions. It has for example be determined experimentally for $Cu^{2+}$-ions that animal glues have an insufficient affinity for heavy metals at a pH lower than 6. At a pH higher than or equal to 6, these animal glues present on the contrary the drawback that it is very difficult to separate them back out of the water after having bound with heavy metals. This requires in particular for example very fine filters which clog however quickly and allow only a slow percolation of the water. Moreover, these products precipitate slowly in water.

An object of the invention is to realize a product for separating contaminants from polluted water which allows to bind amongst others heavy metals with a sufficiently large efficiency and which can be separated easily out of the water after this binding.

Hereto, a product according to the invention is characterized in that the collagen derivative of said product is applied to a mainly granular carrier. By using a carrier, the product according to the invention can always be easily separated back from the water, even at a higher pH, which, as mentioned herein before, is for example required to obtain a sufficient affinity for heavy metal ions, such as for example for $Cu^{2+}$-ions. Moreover, the product provides per volume unit a large surface whereto the heavy metals can bind so that a big amount of heavy metals can be captured. The product and the contaminants bound thereto can be separated relatively quickly in the water from the purified aqueous phase either by precipitation or by flotation. Due to the granular structure of the carrier, the product can also be removed easily by means of a relatively coarse filter. Possibly, a filter bed for filtering polluted water can be composed with the product wherein a.o. a part of the heavy metals are retained.

In a first preferred embodiment of the product according to the invention, said granular carrier contains tannin.

Preferably, said tannin containing carrier is formed by a pulverized wood product, especially by sawdust. It has been found that especially at lower pH's the presence of tannin increases the affinity or the binding capacity of such a product for heavy metals. Due to this higher binding capacity, this product according to the invention allows to purify also stronger polluted waste waters and this in an ecological way.

In a second preferred embodiment of the product according to the invention, tannin is deposited on said granular carrier, for example by impregnating a porous carrier.

An embodiment of the invention which is in particular suitable for separating heavy metals from polluted water is characterized in that said product is formed by a granular carrier which contains at least tannin. It has been found that such a tannin containing granular carrier, which can also be separated back easily after addition to the polluted water, presents also already a good binding capacity for heavy metals.

The invention further relates to a method for separating contaminants from polluted water wherein use is made of a collagen derivative, characterized in that the polluted water is treated with a product containing the collagen derivative applied to a granular carrier so as to bind at least a part of said contaminants to said product, after which an aqueous phase is separated.

The invention provides moreover yet another method also for separating contaminants, especially heavy metals, from polluted water, characterized in that the polluted water is treated by a product formed by a granular tannin containing carrier so as to bind at least a part of said contaminants to said product, after which an aqueous phase is separated.

In both cases, the polluted water can be treated in several ways with the product, for example by mixing this product into the polluted water or by making a filter bed with this product through which the polluted water is then led. Due to the hereabove described characteristics of this product, it can always be separated back.easily.

Preferably, the polluted water is treated with said product at a pH in a range of pH 2.5 to pH 7.

Another embodiment of the method according to the invention for separating contaminants from polluted water wherein a collagen derivative is added to this polluted water, is characterized in that after adding this collagen derivative, the latter is caused to bind with heavy metals present in the polluted water and the collagen derivative with the heavy metals bound thereto is precipitated by adding a tannin.

Other particularities and advantages of the product and the method according to the invention will appear from the following description. This description is only given by way of example and does not limit the scope of the invention. In the drawings is shown by :

Figure 1 the procentual decrease of the $Cu^{2+}$-concentration in polluted water treated with a product according to the invention consisting of bone glue I (45/110) deposited on sawdust, in function of the concentration (g/l) of bone glue I applied to the sawdust and this for three different initial $Cu^{2+}$-concentrations ;

Figure 2 also the procentual decrease of the $Cu^{2+}$-conc. in water polluted with 10 ppm $Cu^{2+}$ in function of the concentration (g/l) of bone glue applied to the sawdust and this for three different kinds of bone glue ; and by

Figure 3 the procentual decrease of the $Cr^{6+}$-conc. in water polluted with 45 ppm chromate in function of the concentration (g/l) of bone glue I (45/110) deposited on the sawdust and this for four different pH's of the polluted water.

The invention has to be situated in the scope of the waste water purification problems and especially in the purification of water polluted with heavy metals. The product according to the invention is used in the purification of such polluted water. By adding that product to this polluted water, by causing that product to bind with contaminants and by separating this product then back together with the contaminants bound thereto, it is possible to purify polluted water. In order to obtain such a water purification, the following two conditions have a.o. to be met :

1) the product to be used has to present a sufficiently large affinity for contaminants, especially for heavy metals, and

2) it has to be possible to separate that product with contaminants bound thereto sufficiently completely and efficiently back from the water.

By means of such a product, a large part of the present contaminants can thus be bound and removed from the polluted water which is required to meet the discharge standards which become always more severe. Table I shows a.o. the present discharge standards for some heavy metals.

Table I : Belgian discharge standards for waste water (Belgian statute book of 23.9.89)

| | |
|---|---|
| pH | 6.5 - 9 |
| COD | 500 ppm |
| Cyanide | 1 ppm |
| Chromium (total) | 2 ppm |
| Copper | 1.5 ppm |
| Nickel | 3 ppm |
| Dissolved iron | 2 ppm |

A first series of products suitable for binding heavy metals are collagen derivatives such as animal glues and gelatine which are both collagen hydrolysis products. The animal glues can further be divided up into glues originating from hide or connective tissue and in bone glue. All these collagen hydrolysis products can also be modified for example by reaction with cross-linkers so that other properties are obtained.

Collagen derivatives show a certain affinity for heavy metals so that they are suitable for removing heavy metals. In the next Experiment 1 it has been determined whether it is actually possible to purify in particular water polluted with $Cu^{2+}$-ions by using only an animal glue.

However, it has to be mentioned first that in this description the kind of animal glue will be indicated by two parameters, the first of which indicates the viscosity, expressed in millipoises, and the second the jelly value, expressed in Bloom-grams. Both parameters are determined according to the standard method which is described a.o. in Ind. Eng. Chem., 16 (3), 310 (March, 1924).

Experiment 1

This experiment has been carried out on rinse water of a copper electrolysis bath which water has been diluted up to a concentration of 20 ppm copper ($Cu^{2+}$). For removing $Cu^{2+}$-ions from this polluted water, use has been made of a bone glue solution comprising 20 g bone glue I (45/110) per liter water.

To a number of 10 ml rinse water samples an amount of bone glue solution and sodium hydroxide has been added each time and distilled water has further been added until a volume of 20 ml was obtained. The added amounts of bone glue solution and NaOH solution (for pH control) have been determined in such a manner that the pH's and the bone glue concentrations represented in Table 2 were obtained in substantially all mutual combinations. Due to the dilution of 20 ml, the initial copper concentration was in each of the samples equal to 10 ppm.

Next, each of these samples were shaked slowly during 1 hour. After precipitation during about 10 hours, the samples were filtered by means of a fine filter paper (S&S 589/3 ; a trade mark of Schleicher und Schuell) until a clear filtrate was obtained. To this end, it was sometimes necessary to filter several times. The rest concentration of $Cu^{2+}$ in these filtrates were determined by means of atom absorption and converted to a procentual decrease of the $Cu^{2+}$-conc. Table 2 shows the results of this experiment.

Table 2 : procentual decrease of the $Cu^{2+}$-concentration of a 10 ppm $Cu^{2+}$-solution in function of the concentration of added bone glue I and in function of the pH.

| Conc. bone glue \ pH | 4,5 | 5 | 6 | 7 | 8 |
|---|---|---|---|---|---|
| 0,00 | 46 | 47 | 50 | 91 | 99 |
| 0,10 | 42 | 45 | 50 | 75 | 88 |
| 0,15 | 46 | 55 | 55 | 75 | 93 |
| 0,20 | 54 | 56 | 53 | 73 | 87 |
| 0,30 | 57 | 55 | 53 | 79 | 87 |
| 0,50 | 61 | 59 | 68 | 78 | 89 |
| 0,75 | 57 | 62 | 80 | 87 | 88 |
| 1,00 | 57 | 58 | 86 | 84 | 83 |
| 1,50 | 57 | 62 | 88 | 74 | 62 |
| 2,00 | 49 | 68 | 90 | 54 | 33 |
| 3,00 |  | 61 | 90 | 54 | 33 |

This tabel shows that bone glue I can bind $Cu^{2+}$-ions and that it is therefore possible to remove $Cu^{2+}$-ions from polluted water by means of bone glue I. Moreover, it appears also that the binding capacity of bone glue I depends on the pH of the polluted water and that especially at a pH smaller than 6 no good results are obtained. Only from pH 6 on, better results i.e. a 80 to 90 % decrease of the $Cu^{2+}$-concentration can be obtained.

A drawback of simply adding a bone glue solution to the polluted water consists in that it is difficult to remove the bone glue back from the water after binding with heavy metals. Indeed, in this experiment it was not possible to obtain a clear solution only by precipitating. On the contrary, the treated samples had to be filtered at least one time by means of a fine filter paper. From pH 6 on, even at least three successive filtrations were necessary to obtain a clear solution and thus to obtain the results shown in Tabel 2. Therefore, it will be clear that such a method is not feasible in practice since at a pH lower than 6 the binding capacity of bone glue is too small whereas at a pH higher or equal to 6, the bone glue and the heavy metals bound thereto can practically not be removed anymore.

The following experiment has been carried out in order to demonstrate the filter difficulties still clearlier.

Experiment 2

In this experiment the same steps as in experiment 1 were carried out however only for a bone glue concentration of 1.5 g bone glue I per iter in water polluted with 10 ppm $Cu^{2+}$ and this at a pH of 6. Further, use has been made of different filter means, by which the samples have been filtered, however, only one time. The obtained results are indicated in Table 3.

5

Table 3 : Procentual decrease of the $Cu^{2+}$-conc. of a 20 ppm $Cu^{2+}$- solution after adding 1.5 g/l bone glue I, at pH 6 and in function of the used filter means.

| Filter means | % decrease |
|---|---|
| Coarse filter paper (S & S 589/1)[*] | 37 |
| Fine filter paper (S&S 589/3)[*] | 70 |
| Filter bed of Dicalite 215[**] | 84 |
| Filter bed of Dicalite 418 [**] | 76 |
| Filter bed of Dicalite 478 [**] | 58 |

(*) a trade mark of Schleicher und Schuell

(**) a trade mark for a perlite of Dicalite.

This experiment shows that the finest material, i.e. Dicalite 215 is required to obtain a clear filtrate and to obtain a sufficiently effective separation of the bone glue in combination with the adsorbed heavy metals. Using such a fine filter bed is however expensive since it has to be replaced regularly due to deposition of bone glue and moreover since it does not allow a high percolation rate of the water.

In order to combine a good binding of the collagen derivative with heavy metals with a good separability of the collagen derivative from water, the collagen derivative is applied according to the invention to a mainly granular carrier. This granular carrier can be formed for example by a granular synthetic material or by a flocky natural substance (for example viscose pulp). Preferably, the carrier is porous so that it can be impregnated with the collagen derivative.

It has been determined experimentally that depositing the collagen derivative hardly influences the affinity of this collagen derivative for heavy metals and this also at a pH higher than or equal to 6. An advantage of such a product, consisting of a collagen derivative applied to a granular carrier, consists in that after adding to polluted water and thus after binding with contaminants, it can be removed back much easier from this water. Depending on the specific gravity of the granular carrier, the whole will precipitate easily or will be driven to the water surface by flotation techniques for example by causing air to bubble up through the polluted water. Due to its granular characteristics, the carrier can also be filtered out easily by means of a relatively coarse filter.

In a preferred embodiment of the invention, use is made of a collagen derivative which is applied to a tannin containing granular carrier, such a carrier can be formed for example by the above mentioned natural or synthetic carrier on which a tannin, preferably a natural tannin, has been deposited. It has been found that the presence of tannin improves the binding capacities of the collagen derivative. As well for the tannin as for the collagen derivative, depositing on or applying to a carrier does not only mean in this description applying to the outside of the carrier but also for example impregnating or drenching a porous and/or granular carrier.

Depositing the tannin on the granular carrier can be prevented by using a carrier containing already tannin as such. An example of such a carrier is for example a pulverized wood product such as sawdust. By depositing the collagen derivative on sawdust, a product is obtained which precipitates quickly after adding it to polluted water. Above the precipitate, a clear aqueous phase is thus formed from which most of the heavy metals are removed. This purified aqueous phase can be removed simply by decantation. The precipitate itselfs forms a compact cake from which the remaining water can be removed easily, for example by means of filter presses. The thus obtained dehydrated product can then be burned so that substantially no waste remains.

Further advantages of the use of an ecologically harmless pulverized wood product will appear from the following experiment 3.

Experiment 3

In this experiment, the possibility has been investigated to purify the same waste water as in experiment 1 by using also bone glue I (45/110) which has been deposited in this experiment 3, however, on sawdust from beech.

First, the waste water has been diluted with distilled water upto a $Cu^{2+}$-concentration of 10, 20 and 50 ppm. The pH's of these different dilutions were pH 3.24, pH 3.14 and pH 2.90 respectively.

Moreover, bone glue solutions with bone glue concentrations of 0 ; 2 ; 5 ; 10 ; 15 ; 20 ; 30 and 40 g/l have been prepared. One liter of each of these solutions has been mixed thoroughly with 1 kg of sawdust. The sawdust impregnated in this way with bone glue solution has then been dried at a temperature of about 50°C.

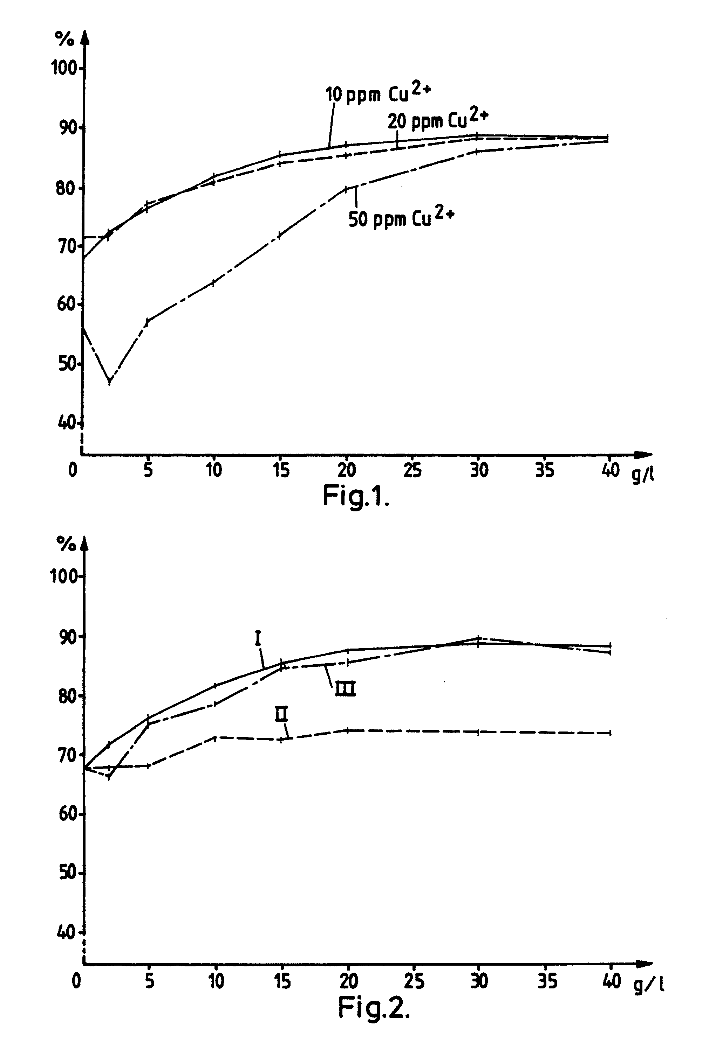

Subsequently, amounts of 30 g of each of these dried products were measured and added to one liter of each of the three different dilutions. After shaking for one hour and precipitating for some hours (for example 10 hours) the rest concentration on copper in the separated clear aqueous phase was determined by means of atom absorption. Figure 1 illustrates the procentual decrease of the $Cu^{2+}$-concentration in function of the concentration of bone glue I deposited on the sawdust and this for the three different $Cu^{2+}$-concentrations.

Figure 1 demonstrates that sawdust as such, without deposition of bone glue, provides already a considerable binding capacity for heavy metals. However, by depositing bone glue on the sawdust, this binding capacity is further increased which is essential for stronger polluted water to meet the fixed discharge standards.

Figure 1 demonstrates further that the procentual amount of bound copper is independent of the $Cu^{2+}$-concentration up to a $Cu^{2+}$-concentration of 20 ppm but that at higher concentrations of for example 50 ppm this amount is decreased. As indicated in Figure 1, a maximum of about 90 % is obtained for $Cu^{2+}$-concentrations up to 20 ppm with sawdust treated with 20 g/l bone glue whereas the same maximum can be reached for a 50 ppm $Cu^{2+}$-solution with sawdust treated with 40 g/l bone glue.

Experiment 4

In order to examine the influence of the pH, experiment 3 was repeated for a $Cu^{2+}$-concentration of 20 ppm. On the other hand, in this experiment 4 the pH of the diluted waste water was adjusted to different pH values by adding $H_2SO_4$ or NaOH. Table 4 shows the obtained results.

Table 4 : Procentual decrease of the $Cu^{2+}$-conc. of a 20 ppm $Cu^{2+}$ solution in function of the concentration of bone glue I of the solution deposited on the sawdust in function of the pH.

| Conc. bone glue g/l | pH2 | pH3 | pH4 | pH6 |
|---|---|---|---|---|
| 0,0 | 14,0 | 71,6 | 73,1 | 66,2 |
| 5,0 | 14,5 | 73,6 | 76,7 | 72,7 |
| 15,0 | 16,6 | 83,2 | 85,0 | 81,3 |
| 20,0 | 18,0 | 88,8 | 91,2 | 87,1 |
| 30,0 | 22,5 | 89,3 | 88,6 | 79,1 |

In contrast to the results from Table 2 obtained with bone glue as such, this Table 4 shows that good results are already obtained from pH 3 on and this for a bone glue concentration deposited on the sawdust of 15 to 20 g/l. For 30 g sawdust per liter water and 1l bone glue solution per kg sawdust, this means after conversion about 0.45 to 0.6 g bone glue per liter polluted water. By comparing with the results from Table 2, it can be seen that sawdust does not only improve the separability but further also the binding capacity and this especially at a pH lower than 8.

Experiment 5

In this experiment, the influence of the kind of bone glue has been examined. To this end, experiment 3 was repeated for a $Cu^{2+}$-concentration of 10 ppm and for three different kinds of bone glue, notably bone glue I (45/110), bone glue II (74/223) and bone glue III (35/65).

Figure 2 shows the procentual decrease of the $Cu^{2+}$-concentration in function of the concentration of bone glue deposited on the sawdust and this for the three kinds of bone glue.

Figure 2 indicates that bone glues I and III have a similar influence whereas the effect of bone glue II is much smaller.

Therefore, the product according to the invention consists preferably of a pulverized wood product on which bone glue having a viscosity in the range of 30 to 60 millipoises and a jelly value smaller than 150 Bloom grams has been deposited.

The product according to the invention is not only suitable for removing $Cu^{2+}$-ions but also a.o. for other heavy metal ions such as for example $CrO_4^{3-}$-ions. According to the present state of the art, this six valency chromium can only be precipitated as hydroxide after reduction to $Cr^{3+}$. By repeating experiment 1, carried out however on a 20 ppm chromate solution, it has been determined experimentally that adding a bone glue solution directly to the polluted water is certainly for $Cr^{6+}$-contaminants not a good solution since the maximum decrease of the $Cr^{6+}$-concentration which has been measured was only 30 %. Nevertheless, it appears from the following experiment 6 that removing chromate ions is on the contrary possible with a bone glue deposited on sawdust.

Experiment 6

In this experiment use has been made of sawdust from beech and of bone glue I (45/110) for binding chromium from water polluted with 45 ppm chromic acid ($H_2CrO_4$).

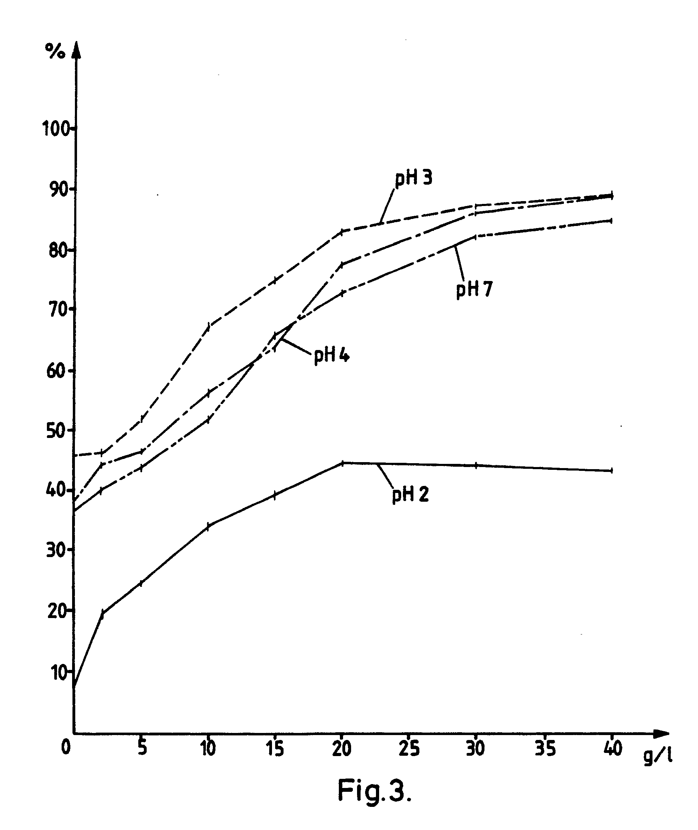

From this polluted water amounts of 1 liter were repeatedly taken, the pH of which was adjusted to the different desired pH values by adding NaOH or $H_2SO_4$. Before treating these samples, bone glue solutions with respectively 0, 2, 5, 10, 15, 20, 30 and 40 g/l bone glue I have been deposited on the sawdust at a ratio of 1 liter solution per kg sawdust and dried in an analogous way as in experiment 3. To each of the one liter samples of polluted water adjusted to the desired pH, 30 g of the treated sawdust have been added. After shaking for one hour and precipitating for some hours, the rest concentration of chromium in the water was determined by means of atom absorption. Subsequently, the procentual decrease of the chromium concentration in the polluted water was calculated on the basis of these data. Figure 3 illustrates this procentual decrease in function of the bone glue concentration deposited on the sawdust and this for a number of different pH values.

This figure 3 demonstrates that sawdust as such can bind also chromate ions and that the amount of ions which are bound increases as more bone glue is deposited on the sawdust. In particular, the procentual decrease of the chromium concentration at pH 3 increases from about 45 % for untreated sawdust to about 83 % for sawdust treated with 20 g/l bone glue. Further Figure 3 shows also that for pH 2 insufficient results are obtained. At pH 3, on the contrary, the best results seem to be obtained which decrease slightly as the pH increases. Therefore, in a preferred embodiment according to the invention, the treated sawdust will be added to the polluted water within a preferred pH range from pH 2.5 to pH 7.

It will be clear that the product and the method according to the invention are also suitable for other heavy metals such as for example for $Ni^{2+}$, $Hg^{2+}$, $Pb^{2+}$ and $Fe^{2+}$. From further experiments, it appeared even that also cobalt and manganese ions can bind with bone glue as such, especially then at a pH value of about 6. A granular carrier is required also in these cases for enhancing the separability.

Besides the use of a granular carrier, the invention provides also a variant wherein the separability of the collagen derivative is improved by a direct addition of a tannin to the polluted water. Indeed, it has been found that the combination of a collagen derivative with a tannin results in an insoluble product which precipitates easier. This principle is different from the one applied in Chemical Abstract No. 108:43306 of 1988, described in the preamble, since in the method according to the invention tannin is added to the polluted water whereas according to the known principle, it is the tannin which has to be removed from the water. The object of the known method was namely to precipitate tannins present in waste water of a tannery by adding animal glues. This publication therefore does not teach to add tannin to waste water. The method according to the invention is different due to another use of tannin for another object, notably for causing the heavy metals which have been bound previously with a collagen derivative, to precipitate. Therefore, another use of tannin is clearly involved here.

Further it will be clear that when, for example for strongly polluted water, the discharge standard has not yet been met after a first purification step, a second purification step can subsequently been carried out also by using the product according to the invention.

## Claims

1. A product for separating contaminants from polluted water, which product comprises a collagen derivative, characterized in that said collagen derivative is applied to a mainly granular carrier.

2. A product according to claim 1, characterized in that said granular carrier contains tannin.

3. A product according to claim 2, characterized in that said tannin containing carrier is formed by a pulverized wood product, especially by sawdust.

4. A product according to claim 1, characterized in that tannin is deposited on said granular carrier.

5. A product according to anyone of the claims 1 to 4, characterized in that said collagen derivative is an animal glue.

6. A product according to claim 5, characterized in that said animal glue has a viscosity in the range of 30 to 60 millipoises and a jelly value smaller than 150 Bloom grams.

7. A product for separating contaminants, especially heavy metals, from polluted water, characterized in that said product is formed by a granular carrier which contains at least tannin.

8. A product according to claim 7, characterized in that said granular carrier is formed by a pulverized wood product, especially by sawdust.

9. A method for separating contaminants from polluted water, wherin use is made of a collagen derivative, characterized in that the polluted water is treated with a product containing the collagen derivative applied to a granular carrier so as to bind at least a part of said contaminants to said product, and after which an aqueous phase is separated.

10. A method according to claim 9, characterized in that a product is used wherein the collagen derivative is applied to a tannin containing granular carrier.

11. A method for separating contaminants, especially heavy metals, from polluted water, characterized in that the polluted water is treated with a product formed by a granular tannin containing carrier so as to bind at least a part of said contaminants to said product, after which an aqueous phase is separated.

12. A method according to anyone of the claims 9 to 11, characterized in that the polluted water is treated with said product at a pH in the range of pH 2.5 to pH 7.

13. A method for separating contaminants from polluted water wherein a collagen derivative is added to this polluted water, characterized in that after adding this collagen derivative, the latter is caused to bind with heavy metals present in the polluted water and the collagen derivative with the heavy metals bound thereto is precipitated by adding a tannin.

Fig.1.

Fig.2.

Fig.3.

European
Patent Office

**EUROPEAN SEARCH
REPORT**

Application Number

**EP 90 20 3482**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN, vol. 11, no. 232 (C-412), 26th March 1987; & JP-A-61 247 385 (ASAMA KASEI K.K.) 04-11-1986 <br> – – – | 1 | C 02 <br> F 1/62 <br> C 02 F 1/28 <br> B 01 J 20/24 |
| A | NL-A-7 802 615 (INSTITUT FRANCAIS DU PETROLE) <br> * Claims 1-4 * <br> – – – | 1,2,4,7,9, 10 | |
| A | DE-A-2 434 632 (AG OF INDUSTR. SCIENCE & TECHNOLOGY) <br> * Claims 1,2,8,23 * <br> – – – | 1,2,13 | |
| A | FR-A-5 690 05 (BENOIT) <br> * Claims * <br> – – – | 1 | |
| A | CHEMICAL ABSTRACTS, vol. 108, no. 6, 8th February 1988, page 354, abstract no. 43306v, Columbus, Ohio, US; Z. VINKLAREK et al.: "Treatment of spent tanning liquors containing syntans. I. Chemical pre-treatment", & KOZARTSVI 1987, 37(9), 246-50 <br> – – – | 1 | |
| A | DE-A-6 014 89 (KRAMER) <br> – – – – – | | |

| TECHNICAL FIELDS SEARCHED (Int. Cl.5) |
|---|
| C 02 F <br> B 01 <br> J |

The present search report has been drawn up for all claims

| Place of search | Date of completion of search | Examiner |
|---|---|---|
| The Hague | 17 April 91 | KASPERS H.M.C. |